# EUROPEAN PATENT SPECIFICATION

(11) **EP 2 510 231 B1**
(45) Date of publication and mention of the grant of the patent: **29.07.2015**
(21) Application number: 10836288.0
(22) Date of filing: 07.12.2010
(51) Int. Cl.: F03D 11/04

(54) **FLOATING ENERGY PRODUCING PLANT**
SCHWIMMENDES STROMKRAFTWERK
CENTRALE FLOTTANTE DE PRODUCTION D'ÉNERGIE

(30) Priority: 07.12.2009 SE 0901531
(43) Date of publication of application: 17.10.2012
(73) Proprietor: Hexicon AB, 116 64 Stockholm (SE)
(72) Inventor: TUNBJER, Anders, S-742 43 Öregrund (SE); SUNDQUIST, Percy, S-742 43 Öregrund (SE); LANDVIK, Dag, S-742 43 Öregrund (SE)
(74) Representative: B & L Gruppen AB
(86) International application number: PCT/SE2010/051346
(87) International publication number: WO 2011/071444

(56) References cited:
- EP-A2- 1 106 825
- WO-A1-00/58621
- WO-A1-2009/067023
- WO-A1-2010/021585
- DE-A1- 3 224 976
- DE-A1- 10 219 062
- DE-A1- 10 219 062
- DE-A1-102008 031 042
- NL-C2- 1 008 318

## Description

### Background

Wind power is becoming a more preferred energy extracting system because it does not evaporate CO2 into the atmosphere. A few of the problems with wind power on land is that they interfere the environment and that they can be costly to maintain since they are often placed in uninhabited areas. Maintenance, reparation and parts exchange therefore often require complicated transports to separate units and problematic work operations, which for example require cranes for heavy lifts.

Wind power units according to previously known technique are also placed as separate units in the ocean, moulded to the bottom with concrete pillars. This requires relatively shallow water and is therefore usually a placement close to shore and close to habited or recreational areas. None of these placements are desirable from an environmental view. The coast line close to shore shall therefore as long as possible be spared from installations of this type, especially if better alternatives exists. The maintenance costs for todays coastal near ocean based mono-units are 3-4 times higher than the corresponding units on land. To build wind power plants further out to sea meets the problem of a usual greater depth, but also the practical economical problem of supervision and maintenance. Due to the fact that wind power plants up to today uses separate wind generator units, a placement further out to sea quickly becomes uneconomical. The principle of placing wind power plants out on the ocean has the advantage that it there is normally a more frequent and harder wind. It is also known to assemble several wind turbines in an offshore installation, see e.g. NL 1 008 318 and DE 102 19 062*.*

### Summary of invention

An object of the present invention is to create an energy producing plant which recovers energy from wind. This energy producing plant is described in claim 1.

The energy producing plant according to claim 1 comprises at least three wind generators attached to a common floating unit. The unit can be placed on water independent of placement and water depth. The unit comprises a frame work constructed of pipes connected in at least three attachment points having the shape of nodes. What is characterized for the invention is that the pipes are sealed in its respective ends and forms separate floating parts adapted to be connected to the nodes.

This creates a wind power extracting plant that can be placed on water further away from the shore, which spares the coast line from the installation. Since it is at least three wind generators arranged on the same unit the maintenance can be profitable. Preferably, the at least three wind generators are placed optimally at the surface of the unit so that each separate wind generator can recover as much wind energy as possible. When the pipes form separate floating parts the transport of the pipes and the assembly of the plant is facilitated. Thus, the plant does not have to be assembled at solid ground to be transported out to sea. Instead the separate parts can more quickly and more economically be transported out to the plant site. It is also possible to at a simple way exchange broken parts.

In one embodiment of the invention the pipe ends are provided with first attachment devices adapted to fit second attachment devices arranged on the nodes. Either can the first attachment device be designed as a male part and the second attachment device as a female part or can the second attachment device be designed as a male part and the first attachment device as a female part. The attachment devices are used to connect the pipes with each other or with the nodes.

In one embodiment, each node has at least two attachment devices to that each node can be connected to at least two pipes. The node forms a binding link between each pipe part.

In another embodiment, is the first and the second attachment device sealed against each other and are connected with a mechanical lock. Thus, creating a sealed space inside the pipes.

In one embodiment, the pipe ends are sealed with an openable hatch. In another embodiment, also the second attachment device comprises an openable hatch with is arranged through the outer shell of the node. When arranging openable hatches in both ends of the pipes and into the nodes, both nodes and pipes can be connected to that the pipes form transport paths between the nodes and the space in these parts can be used as transport paths, workshops, storage rooms, accommodations or provide space for other functions. For example can one node be the main building of the plant, which can be used as hotel and conference rooms.

In one embodiment, the unit also comprises a center node connected to an outer construction / frame work comprising peripheral nodes and pipes connecting the nodes. By connecting the pipes a simple construction is created which is cost effective to produce.

In one embodiment pipes can eject from the center node to the peripheral nodes. These additional pipes further stabilize the construction and each node is thus connected to pipes in at least three attachment points/ attachment devices.

In one embodiment the power generators are placed on the nodes which form a foundation for the power generators. The nodes form a foundation for the power generators. This leads to a solid unit which has a good water position.

In another embodiment, at least one water tank is placed in the pipes and/or in the nodes. The amount of water in the tank is adjustable. The amount of water in the water tanks can be used to balance and position a separate pipe in the water during assembly or disassembly to or from two nodes. The amount of water in the water tanks can also be used to balance the whole energy producing plant depending on weather and wave height.

In one embodiment the plants comprises an anchoring system adapted to anchor the plant with the bottom. The anchoring system can be placed at a greater depth than previous plants.

In one embodiment of the anchoring system it is essentially centrally placed. Due to this placement the plant can freely rotate around a center axis. If a center node is used as a part of the floating unit, only the center node can be anchored to the bottom. Due to this construction, the outer construction can be so arranged that it can rotate 360 degrees around the center node.

In another embodiment, the plant can automatically arrange itself after the wind direction so that the firmly attached wind generators always are placed in an optimized direction.

The adjustment after the wind can be performed by for example wind rudders and/or pod propeller (azipod), i.e. electrically driven propellers.

In order for the construction to have a solid anchoring in the bottom, the anchoring system may comprise at least three, sideways arranged, anchoring attachments.

In order to create a simple construction yet cost effective to produce, the common floating unit of the plant can comprise pipes and nodes where the pipes and/or the nodes are made of steel.

To protect them against weather and wind, the pipes and/or nodes can in one embodiment be provided with an outer insulation comprising a, to the pipe glued layer of cellular plastic, covered by an outer layer of glass fiber armored plastic.

The floating unit can have the shape of a hexagon. This shape creates a natural and optimized balance and placement of the wind generators.

The common floating unit of the plant preferably comprises pipes with a diameter between 2 and 15 meters and nodes with a diameter between 10 and 30 meters and a height between 15 and 40 meters. The pipes can have a length of 120-300 meters.

The wind generators can be wind generator towers on with a vertically rotating propeller unit is arranged. The wind generators can also be standing or lying wind shovel devices. To recover as much energy as possible the wind generator tower preferably has a height of approximately 50-150 meters and a propeller radius of approximately 50 meters. Entrance to the propeller unit is preferably performed through an inner shaft in the tower. The inner shaft of the wind generator towers are connected by the pipes and nodes so that an indoor transportation of parts to and from the propeller units can be performed.

In order to protect also the wind generators from the wear of the environment, the wind generator tower and the propeller unit can be provided with an outer insulation comprising a, to the pipe glued layer of cellular plastic, covered by an outer layer of glass fiber armored plastic.

The plant can also be completed and optimized with other electrically generating systems. For example, the plant's vertical movements in the ocean can be used for energy conversion. Further, the sun energy can be converted by arranging sun cells on the plant. In order to optimally recover the wind energy, wind shovel devices can be positioned at a level between the common floating unit and under the propellers of the wind generator tower.

Observe that all embodiments or part of an embodiment can be combined at all possible ways.

### Description

In the following, the embodiments of the invention are explained more in detail. All examples shall be seen as a part of the general description and can therefore be combined in any way. Individual parts of the different embodiments can be freely combined or exchanged as long as they are within the scope of the invention.

One purpose of the present invention is to minimize the environmental problems with wind power plants on land or near the coasts on the ocean and at the same time reach the lowest possible price per kWh. The starting point is that a wind power plant on the ocean is to be preferred over land based wind power due to environmental issues. However, technique has to be offered with also provides a competitive price. The present invention fulfills these requirements. With this invention wind power plants at the ocean can be placed far out on deep water, beyond the horizon if it is desirable, i.e. approximately 20-30 km outside the coast depending on the height of the construction. However, the construction according to the invention does not at all give a distasteful expression, instead it is an interesting and attractive visiting point since it also can be used for example as a sea restaurant or a marine life center with demonstration of optimized wind energy technique. A coast community with approximately 20 000 habitants can be supplied with all its energy needs by only one installed unit according to the invention.

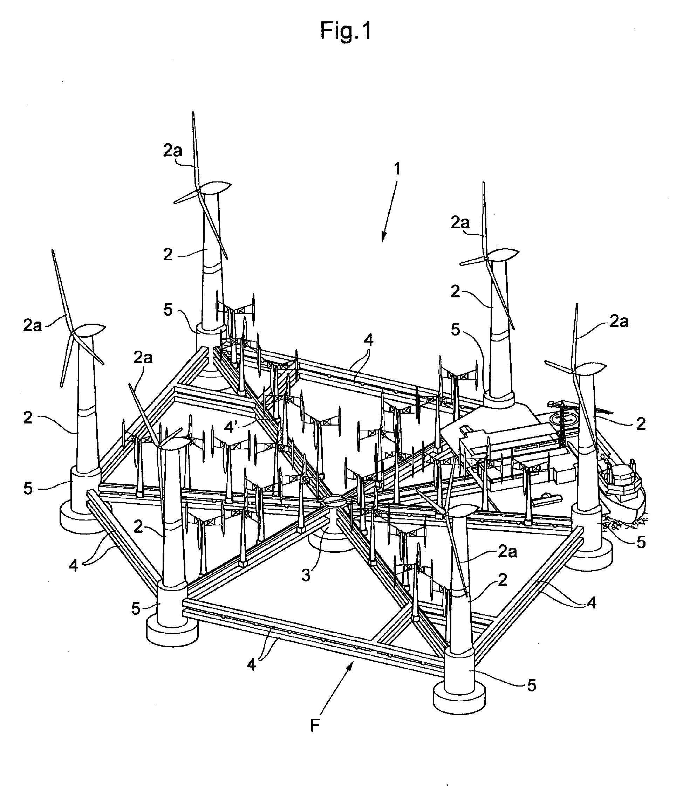

One embodiment of the invention is disclosed in figure 1 a and 1 b and is a floating plant 1 on which six wind generators have been constructed. The plant can comprise at least three wind generators 2 and up to six to eight or more, depending on which type of wind generators are used. Preferably at least four and maximum seven conventional wind generators are used. The wind generators 2 are preferably of the type wind generator towers with vertical propellers 2a, however they can also be wind generator towers with horizontally rotating propellers.

The plant is preferably in the shape of a hexagon with one center node 3 which creates a natural optimized balance and placement of the wind generator towers. It is assembled by connecting one center node 3 with an outer frame work F comprising large steel pipes 4, approximately 7-11 meters in diameter or cross section. The pipes can be circular, rectangular or have any other suitable shape. The outer frame work can comprise a set of pipes arranged on or under the water surface or two sets of, in the vertical direction, essentially parallel pipes. These pipes 4 are connected to each other by peripheral nodes 5, placed at the ends of the respective steel pipes 4 of the frame work F, thus in every angle of the hexagon, and forming the outer frame work F. On the peripheral nodes 5 the wind generator towers are placed. The peripheral nodes 5 can be approximately 20 meters in diameter and approximately 30 meters high. The pipes 4 between the angles/nodes 3, 5 can have a length between for example 130-200 meters. Pipes 4', which may have but not necessarily do have, a somewhat smaller diameter/cross section connects the peripheral nodes 5 with the center node 3. Besides creating strength and buoyancy to the construction, the pipes 4 can also be connection paths, accommodation, workshops and storage rooms. It is also possible to arrange a lifting crane or similar device on the plant in order to perform assembly, care and maintenance of the plant. The device can be transported between the wind generator towers on a track system arranged on the top surface of the pipes 4, 4'.

In the pipes 4, 4' and /or the nodes 3, 5 it can be arranged stabilizing and balancing water tanks 6 with a pump system. By distributing more or less water in each tank the construction can be balanced during assembly and use of the floating wind power plant, especially in extreme weather. This balancing function is also important during assembly and a possible exchange of the pipes, while the assembly technique during connection of the pipes with the nodes is based on that the sealed pipe ends 4a, 4b are provided with an attachment arrangement 7 which is adapted to fit a corresponding attachment arrangement 8 on the nodes 5 at a certain mutual floating position. This is more thoroughly explained below.

The pipes 4, which can be made of steel, can have a diameter or a cross section of for example 9 m, a wall thickness of for example 18-22 mm and a length of for example 130-220 m. They can be provided with an outer insulation comprising a, to the pipe glued layer of cellular plastic, approximately 30 mm thick, covered by an outer layer of glass fiber armored plastic, approximately 8 mm, which withstands the weather conditions on the location during the expected lifetime of the construction, which is at least 50 years. If a serious damage should occur on a pipe, for example due to a collision, this pipe can if necessary be removed and exchanged or towed to a dock yard for reparation.

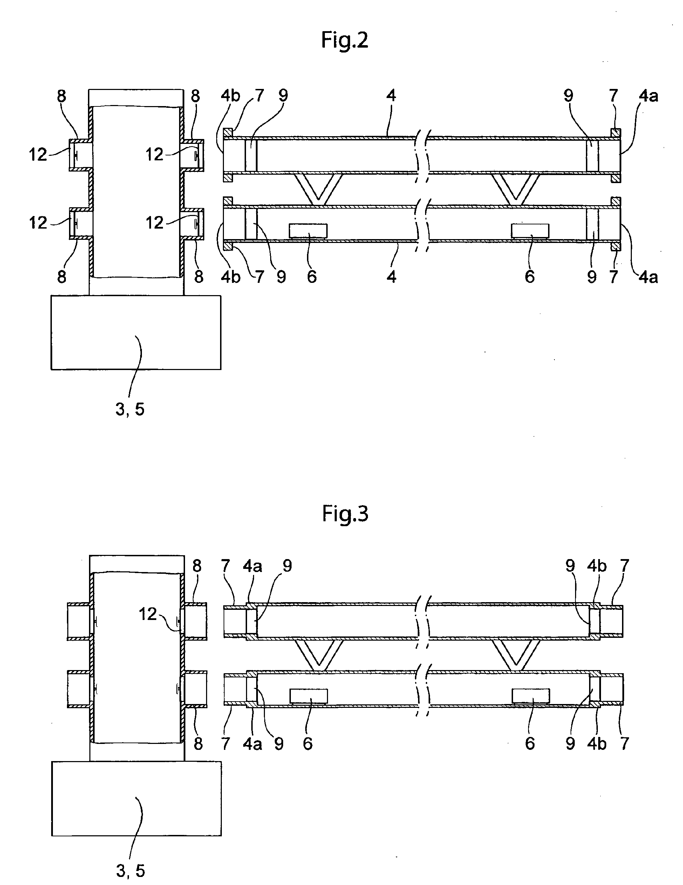

The pipes 4, as further described in figure 2-4, are sealed in each pipe end 4a, 4b for example by a sealing part 9 in the form of an openable hatch. Thus, the pipes form a sealed air filled unit which can float on water and be towed to the location where the energy producing unit shall be build. The sealing part 9 can be arranged in the outer end 4a, 4b of the pipe or located a certain distance inside the pipe.

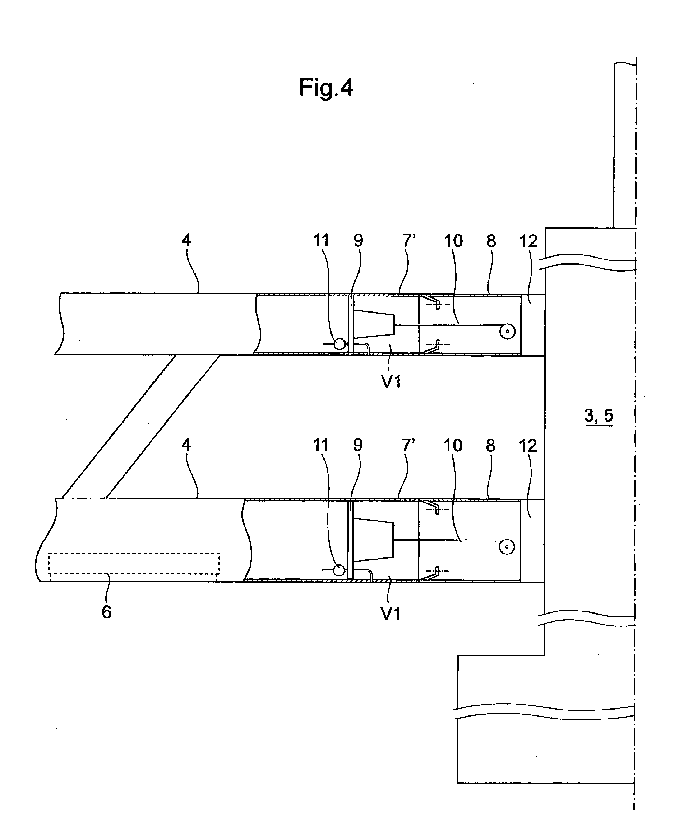

The pipes 4 are in their respective end 4a, 4b provided with a first attachment device 7 which fits to a respective second attachment device 8 on the nodes 3, 5. In the embodiment of the first attachment device 7 disclosed in figure 3 and 4, the pipe ends 4a, 4b are tapered and adapted to be inserted as a male part in the second female shaped attachment device 8 arrange on the nodes 3, 5. Of course it is possible to arrange the female part on the pipe ends 4a, 4b and the male part on the nodes 3, 5, as disclosed in figure 2. The parts are, when they are connected to each other, sealed with a sealing and/or by a sealing surface which prevents medium in the form of water or air to be transported between the inner volume of the pipes and its surroundings.

During connection of the pipes 4 with the nodes 3, 5, the part are preferably lined up in line with each other and connected with a pulling device 10, for example a winch, which can pull together the attachment devices so that they are sealed against each other. If the connection of pipes 4 and nodes 3, are performed at sea, the volume V1 enclosed by the attachment devices 7, 8 is filled with water. I.e. the volume V1 which in figure 2 is formed in the, by the node arranged second attachment device 8, between the sealing part 9 of the pipes 4 and the body 3, 5 of the node. To drain the water filled volume V1, a pump 11 is preferably used. When the space with volume V1 is emptied, the pump is used to create an under pressure in the space. This under pressure creates a suction force between the first and the second attachment device 7, 8, which leads to an even more tight sealing between the parts. In order to fixate the parts to the nodes a mechanical locking device is preferably used. This device can connect the attachment devices manually or automatically.

If two in the vertical direction parallel pipes 4 are used, at least the lower of these pipes is provided with one or more level regulating tank systems 6. The tank system is filled or emptied with water to immerse or elevate the pipe in direction towards a predetermined locking position between the pipe and the node when the final mechanical connection is performed. During disassembly of a pipe, for example for reparation or exchange, a reversed procedure is performed. When performing ballast balancing of the entire unit with the water tank system, the whole construction can always be calibrated to a proper buoyancy position, despite the existence of broken pipe segments or if some pipe parts are under exchange.

The center node and the peripheral nodes 3, 5 are preferably made of steel with a thickness of for example 18-22 mm. The wind generator towers 2 are preferably placed on the nodes. A tower can have a height of for example 50-150 m and a propeller radius of for example 50 m. Access to a generator housing is preferably possible through an inner shaft in the tower. The peripheral nodes 5 are provided with at least two, but preferably three to six, other attachment devices 8. The attachment devices are directed towards the centre node 3 and towards the peripheral nodes 5 in the outer frame work F. If two parallel pipes 4 are used as frame work F are preferably the other attachment devices placed on the nodes vertically over each other. Openable hatches 12 can be arranged through the outer shell of the node and be placed interacting with the other attachment devices 8. Thus, a possible transport route between the pipes through the inner volume of the pipes is created.

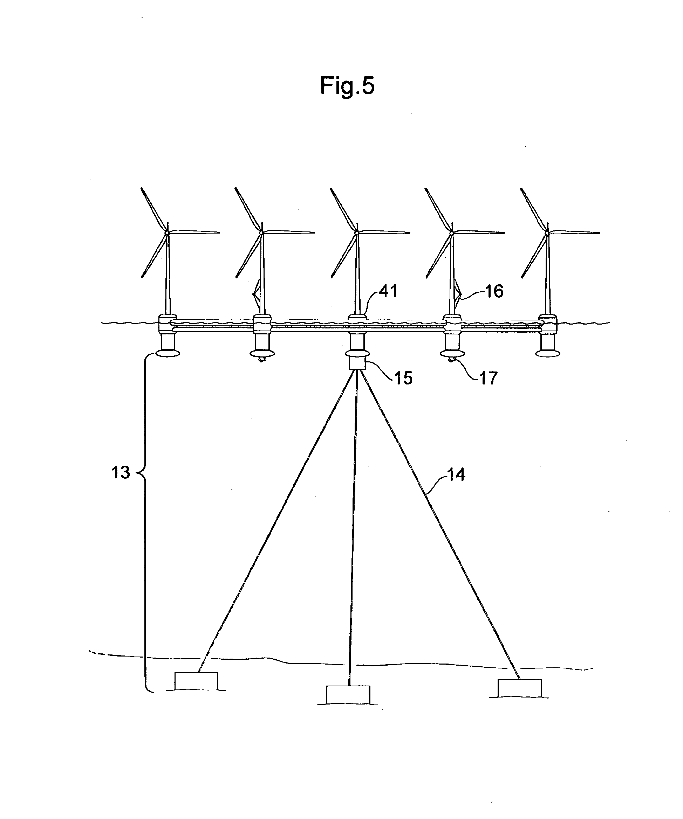

Due to the floating properties of the wind power unit, it can operate independent of the depth. It can be anchored at the bottom, for example with an anchoring system 13 used for large marinas. Se figure 5. The anchoring system 13, for example of the brand "Seaflex", emanates for example from the center axis A1 of the centre node with for example three to eight laterally extending anchoring attachments 14. The anchoring attachments 14 are attached to a, in relation to the centre node 3, rotatable hub 15. The hub 15 is preferably having the shape of a rotatable wheel, placed under the center node or at a certain distance from the center node. The anchoring at the bottom can for example be performed by anchoring attachments 14 having the form of three or more lines, extending from the hub at an approximate angle of 45 degrees. The hub 15 is through the anchoring attachments firmly anchored at the bottom and the entire construction can rotate around this hub 15. Through this hub an electrical wire can extend which is intended to distribute the generated power.

Thus, around this inner hub 15 the entire construction 1 is able to rotate freely 360 degrees and automatically adjust in line with the wind direction so that the firmly attached wind propellers always are placed in an optimum position. Preferably, this is done by mounting a wind rudder 16 on the platform. Preferably on its rear part in relation to the wind direction, but other placements are also possible. A floating wind power plant according to the invention can have several different geometrical shapes. What is central is that it can adjust towards the wind with the aid of for example wind rudders 16 and/or pod propellers 17, i.e. electrically driven propellers.

The wind power plant according to the invention can also be supplemented and optimized with other electrical current producing systems, such as for example wave power, sun cells and vertical or horizontal wind shovels rotating around its own axis, thus can use the incoming wind blowing below the lowest position of the propellers. Furthermore, is it possible to utilize the vertical movements in the sea of the entire platform for energy extraction, for example inside the nodes which have a diameter of for example 20 m och and a height of for example 30 m.

By being able to use a number of wind power generators on the floating wind power plant according to the invention, placed optimally on the surface of the platform, as well as being able to utilize the power of the waves along the outside of the plant on the side directed towards the waves, a large-scale production advantage is created. This makes it possible to keep a permanent staffing on board for reparation and maintenance. Single placed wind generators located on the ocean is calculated to have an efficiency loss of 20%, while an installation according to the invention is calculated to have an efficiency loss of only 8%.

## Claims

1. An energy producing plant (1) comprising at least three wind generators (2) attached to a common floating unit which can be placed on water independent of placement and water depth, wherein the unit comprises a frame work (F) constructed of pipes (4) connected in at least three attachment points, the pipes (4) are sealed in their respective ends (4a, 4b) and forms separate floating parts adapted to be connected in the attachment points, **characterized in that** the attachment points having the shape of nodes (3, 5), the pipe ends (4a, 4b) are provided with first attachment devices (7) adapted to fit corresponding second attachment devices (8) arranged on the nodes (3, 5), the pipe ends (4a, 4b) are sealed with an openable hatch (9), the second attachment device (8) comprises an openable hatch (12) arranged through the outer shell of the node.

2. An energy producing plant (1) according to claim 1, wherein the first attachment device (7) is designed as a male part and the second attachment device (8) as a female part.

3. An energy producing plant (1) according to claim 1, wherein the second attachment device (8) is designed as a male part and the first attachment device (7) is designed as a female part.

4. An energy producing plant (1) according to claim 1, 2 or 3, wherein the first and the second attachment device (7, 8) are sealed against each other and are connected with a mechanical lock.

5. An energy producing plant (1) according to either of the above claims, wherein the unit comprises a center node (3) connected to an outer frame work (F) comprising pipes (4) and peripheral nodes (5) between the pipes (4).

6. An energy producing plant (1) according to either of the above claims, wherein pipes (4') eject from the center node (3) to the peripheral nodes (5).

7. An energy producing plant (1) according to either of the above claims, wherein the power generators (2) are placed on the nodes (3, 5) which form a foundation for the power generators.

8. An energy producing plant (1) according to either of the above claims, wherein at least one water tank (6) is placed in the pipes (4) and/or in the nodes (3, 5) and wherein the amount of water in the tank is adjustable.

9. An energy producing plant (1) according to either of the above claims, wherein the plant comprises an anchoring system (13) adapted to anchor the plant to the bottom.

10. An energy producing plant (1) according to claim 9, wherein the anchoring system (13) is placed so that the plant can freely rotate around an axis (A1) so that the plant automatically adjusts to the wind direction.

11. An energy producing plant (1) according to claim 10, wherein adjustment after the wind can be performed by for example wind rudders (16) and/or pod propellers (17).

12. An energy producing plant (1) according to either of the above claims, wherein the pipes (4) and/or the nodes (3, 5) are provided with an outer insulation comprising a, to the pipe glued layer of cellular plastic, covered by an outer layer of glass fiber armored plastic.

## Patentansprüche

1. Stromkraftwerk (1) (= Energie produzierende Anlage), das mindestens drei Windgeneratoren (2) umfasst, die an einer gemeinsamen schwimmenden Einheit, die auf dem Wasser unabhängig von der Aufstellung und von der Wassertiefe aufgestellt werden kann, befestigt werden können, wobei die Einheit einen Rahmen (F) umfasst, der aus Rohren (4), die an mindestens drei Befestigungspunkten verbunden sind, konstruiert ist, wobei die Rohre (4) an ihren jeweiligen Enden (4a, 4b) abgedichtet sind und getrennte schwimmende Teile bilden, die dafür ausgelegt sind, an den Befestigungspunkten verbunden zu werden, **dadurch gekennzeichnet, dass** die Befestigungspunkte die Form von Knoten (3, 5) aufweisen, dass die Rohrenden (4a, 4b) mit einer ersten Befestigungsvorrichtung (7) versehen sind, die dafür ausgelegt ist, passend zu der entsprechenden zweiten Befestigungsvorrichtung (8) zu sein, die auf den Knoten (3, 5) angeordnet ist, dass die Rohrenden (4a, 4b) mit einer zu öffnenden Klappe (9) abgedichtet sind, und dass die zweite Befestigungsvorrichtung (8) eine zu öffnende Klappe (12) umfasst, die durch den Außenmantel des Knotens angeordnet ist.

2. Stromkraftwerk (1) nach Anspruch 1, wobei die erste Befestigungsvorrichtung (7) als ein männlicher Teil und die zweite Befestigungsvorrichtung (8) als ein weiblicher Teil ausgelegt ist.

3. Stromkraftwerk (1) nach Anspruch 1, wobei die zweite Befestigungsvorrichtung (8) als ein männlicher Teil ausgelegt ist und die erste Befestigungsvorrichtung (7) als ein weiblicher Teil ausgelegt ist.

4. Stromkraftwerk (1) nach Anspruch 1, 2 oder 3, wobei die erste und die zweite Befestigungsvorrichtung (7,8) gegeneinander abgedichtet sind und mit einer mechanischen Verriegelung verbunden sind.

5. Stromkraftwerk (1) nach einem der obigen Ansprüche, wobei die Einheit einen Mittelpunktsknoten (3) umfasst, der mit einem äußeren Rahmen (F) verbunden ist, der Rohre (4) und umfangsseitige Knoten (5) zwischen den Rohren (4) umfasst.

6. Stromkraftwerk (1) nach einem der obigen Ansprüche, wobei die Rohre (4') von dem Mittelpunktsknoten (3) heraus hin zu den umfangsseitigen Knoten (5) ragen.

7. Stromkraftwerk (1) nach einem der obigen Ansprüche, wobei die Stromgeneratoren (2) auf den Knoten (3, 5), die ein Fundament für die Stromgeneratoren bilden, angeordnet sind.

8. Stromkraftwerk (1) nach einem der obigen Ansprüche, wobei mindestens ein Wassertank (6) in den Rohren (4) und/oder in den Knoten (3, 5) angeordnet ist und wobei die Menge an Wasser in dem Tank einstellbar ist.

9. Stromkraftwerk (1) nach einem der obigen Ansprüche, wobei die Anlage ein Ankersystem (13) umfasst, das dafür ausgelegt ist, die Anlage auf dem Grund zu verankern.

10. Stromkraftwerk (1) nach Anspruch 9, wobei das Ankersystem (13) derart angeordnet ist, dass sich die Anlage um eine Achse (A1) derart frei drehen kann, dass sich die Anlage automatisch in die Windrichtung einstellt.

11. Stromkraftwerk (1) nach Anspruch 10, wobei die Einstellung nach dem Wind zum Beispiel durch Windruder (16) und/oder durch Propellergondeln (Pod-Antrieb) (17) durchgeführt werden kann.

12. Stromkraftwerk (1) nach einem der obigen Ansprüche, wobei die Rohre (4) und/oder die Knoten (3, 5) versehen sind mit einer äußeren Isolierung, die eine an das Rohr geklebte Schicht eines Schaumstoffs umfasst, die durch eine äußere Schicht eines mit Glasfasern bewehrten Kunststoffs bedeckt ist.

## Revendications

1. Centrale de production d'énergie (1) comprenant au moins trois éoliennes (2) fixées à une unité flottante commune qui peut être placée sur l'eau indépendamment du positionnement et de la profondeur d'eau, dans laquelle l'unité comprend une structure (F) constituée de tubes (4) raccordés en au moins trois points de fixation, les tubes (4) sont scellés à leurs extrémités respectives (4a, 4b) et forment des parties flottantes séparées adaptées pour être raccordés dans les points de fixation, **caractérisée en ce que** les points de fixation ayant la forme de noeuds (3, 5), les extrémités de tube (4a, 4b) sont dotées de premiers dispositifs de fixation (7) adaptés pour correspondre à des deuxièmes dispositifs de fixation correspondants (8) agencés sur les noeuds (3, 5), les extrémités de tube (4a, 4b) sont scellées avec une trappe ouvrable (9), le deuxième dispositif de fixation (8) comprend une trappe ouvrable (12) agencée à travers l'enveloppe extérieure du noeud.

2. Centrale de production d'énergie (1) selon la revendication 1, dans laquelle le premier dispositif de fixation (7) est conçu comme une partie male et le deuxième dispositif de fixation (8) est conçu comme une partie femelle.

3. Centrale de production d'énergie (1) selon la revendication 1, dans laquelle le deuxième dispositif de fixation (8) est conçu comme une partie male et le premier dispositif de fixation (7) est conçu comme une partie femelle.

4. Centrale de production d'énergie (1) selon la revendication 1, 2 ou 3, dans laquelle le premier et le deuxième dispositif de fixation (7, 8) sont scelles l'un contre l'autre et sont raccordés avec un verrouillage mécanique.

5. Centrale de production d'énergie (1) selon l'une des revendications précédentes, dans laquelle l'unité comprend un noeud central (3) raccordé à une structure extérieure (F) comprenant des tubes (4) et des noeuds périphériques (5) entre les tubes (4).

6. Centrale de production d'énergie (1) selon l'une des revendications précédentes, dans laquelle des tubes (4') se projettent du noeud central (3) aux noeuds périphériques (5).

7. Centrale de production d'énergie (1) selon l'une des revendications précédentes, dans laquelle les générateurs d'électricité (2) sont placés sur les noeuds (3, 5) qui forment une base pour les générateurs électriques.

8. Centrale de production d'énergie (1) selon l'une des revendications précédentes, dans laquelle au moins un réservoir d'eau (6) est placé dans les tubes (4) et/ou dans les noeuds (3, 5) et dans laquelle la quantité d'eau dans le réservoir est réglable.

9. Centrale de production d'énergie (1) selon l'une des revendications précédentes, dans laquelle la centrale comprend un système d'ancrage (13) adapté pour ancrer la centrale au fond.

10. Centrale de production d'énergie (1) selon la revendication 9, dans laquelle le système d'ancrage (13) est placé de manière que la centrale puisse tourner librement autour d'un axe (A1) de manière que la centrale se règle automatiquement sur la direction du vent.

11. Centrale de production d'énergie (1) selon la revendication 10, dans laquelle le réglage d'après le vent peut être effectué par exemple par des gouvernails à vent (16) et/ou des propulseurs de nacelle (17).

12. Centrale de production d'énergie (1) selon l'une des revendications précédentes, dans laquelle les tubes (4) et/ou les noeuds (3, 5) sont dotés d'une isolation extérieure comprenant une couche de plastique cellulaire collée au tube, recouverte par une couche extérieure de plastique blindé par fibres de verre.
